# EUROPÄISCHE PATENTSCHRIFT

(11) **EP 2 089 632 B1**
(45) Veröffentlichungstag und Bekanntmachung des Hinweises auf die Patenterteilung: **21.07.2010**
(21) Anmeldenummer: 07820601.8
(22) Anmeldetag: 26.09.2007
(51) Int. Cl.: F04B 39/12, G01L 19/06, G01L 19/00

(54) **KOMPRESSOREINHEIT MIT BEDÄMPFTEM MANOMETER**
COMPRESSOR UNIT HAVING A DAMPED PRESSURE GAUGE
UNITÉ DE COMPRESSEUR À MANOMÈTRE AMORTI

(30) Priorität: 11.11.2006 DE 102006053247
(43) Veröffentlichungstag der Anmeldung: 19.08.2009
(73) Patentinhaber: Continental Reifen Deutschland GmbH, 30165 Hannover (DE)
(72) Erfinder: DETERING, Rainer, 30926 Seelze (DE)
(74) Vertreter: Finger, Karsten
(86) Internationale Anmeldenummer: PCT/EP2007/060206
(87) Internationale Veröffentlichungsnummer: WO 2008/058800

(56) Entgegenhaltungen:
- DE-C- 746 797
- DE-C- 930 895
- GB-A- 464 666
- JP-A- 58 132 640
- US-A- 5 655 887

## Beschreibung

Die Erfindung betrifft eine Kompressoreinheit, insbesondere zur Luftverdichtung innerhalb tragbarer / transportabler Geräte, welche mindestens einen Motor, einen Verdichter und ein Manometer aufweist. Oft beinhalten solche Kompressoreinheiten einen einfachen Verdichter, etwa ausgebildet als über einen Schubkurbeltrieb angetriebenen Hubkolbenverdichter. Der Schubkurbeltrieb besteht dabei aus einem Kurbelrad und einer mit Kurbelrad und einem Kolben verbundenen Pleuelstange.

Manometer als Messeinrichtungen in / an Drucksystemen sind empfindlich gegenüber Druckstößen. Während in aufwendig gesicherten Hochdruckdruckanlagen die Wirkung größerer Druckstöße auf die Messelemente durch geeignete Übersetzer oder Drosseln verringert wird, sind in kleinen Druckanlagen die Druckstöße oft als ein ständiges Zeigerzittern am Manometer bemerkbar, wodurch die Ablesung außerordentlich erschwert wird. Dies ist insbesondere bei pulsförmigen Druckerzeugern der Fall, wie etwa bei der Druckerzeugung durch einen Hubkolbenverdichter.

Die DD 254 648 A1 offenbart eine Vorrichtung zur Dämpfung von Druckschwankungen an einem Manometer, bei der die druckführende Leitung über einen auf zwei mit Silikonöl gefüllte Kammern wirkenden Kolben mit dem Manometer verbunden ist. Beide Kammern wiederum sind über eine Drosselstelle / Drosselöffnung miteinander verbunden. Der Mediumsdruck in der druckführenden Leitung wirkt auf und verschiebt den Kolben, wodurch die eine Kammer verkleinert wird. Das verdrängte Volumen strömt über die Drosselstelle in die zweite Kammer und erhöht dort den Druck auf die Manometermembran, die die zweite Kammer teilweise begrenzt. Durch die Drosselung werden die Druckspitzen/Druckstöße in der druckführenden Leitung bedämpft und nicht auf die Membran des Manometers weitergeleitet, wodurch eine relativ gleichmäßige Anzeige des Leitungsdruckes möglich ist. Die hier gezeigte Ausführung mit ihrem relativ komplizierten Aufbau ist jedoch für einfachste und in Großserien hergestellte Manometer aus Kostengründen nicht einsetzbar.

Dokument US 5655887 A offenbart eine Kompressoreinheit gemäß dem Oberbegriff des Anspruchs 1.

Kompressoreinheiten zur Luftverdichtung in Form von tragbaren / transportablen Geräten, also Kleinkompressoren z. B. für das Aufpumpen von Autoreifen oder Schlauchbooten, benötigen aus Kostengründen solche einfach hergestellten Manometer und sind im Allgemeinen mit einfachsten Hubkolbenkompressoren ausgerüstet, die per se ständig Druckspitzen/Druckstöße erzeugen. Hier wird eine Drosselung der Druckspitzen/Druckstöße in der druckführenden Leitung oft so erreicht, dass in der Zuführung zum Manometer eine Stopfenverbindung vorgesehen ist, die bewusst mehr oder weniger dicht schließend ausgebildet wird und durch die in der Undichtigkeit entstehende Spaltdrosselung die Wirkung von Druckstößen auf das Manometer verhindern soll. Die hier insbesondere bei möglichst billig hergestellten Geräten erreichte Drosselung hängt jedoch im Wesentlichen von zufälligen "Dichtungskonstellationen" aufgrund von gerade vorliegenden Toleranzen ab und kann ein Zittern des Manometerzeigers in der Regel nicht vermeiden.

Für die Erfindung bestand also die Aufgabe, eine Kompressoreinheit mit Manometer insbesondere zur Luftverdichtung mit einem Hubkolbenverdichter innerhalb tragbarer / transportabler Geräte bereitzustellen, welche eine sicher reproduzierbare Dämpfung für ein Manometer aufweist, das dann von Druckstößen / Druckspitzen kaum beeinflusst wird und sicher und ohne Zeigerzittern abzulesen ist, und bei der die Dämpfungsfunktion auf einfachste Weise hergestellt werden kann.

Gelöst wird diese Aufgabe durch die Merkmale des Hauptanspruchs. Weitere vorteilhafte Ausbildungen sind in den Unteransprüchen offenbart.

Hierbei ist das Manometer über eine Gewindeverbindung mit der Kompressoreinheit verbunden, wobei die Zufuhr des Druckmediums zum Manometer durch die Gewindegänge erfolgt. Dadurch ergibt sich ein konstruktiv sehr einfacher Aufbau der Drossel durch die Integration der Drosselfunktion in ein vorhandenes und erforderliches Verbindungsbauteil, nämlich in das Schraubgewinde zum Verbinden des Manometers mit der Druckleitung. Es werden weniger bzw. einfachere Teile benötigt, wodurch die Herstellkosten trotz guter Qualität vermindert werden können. Die Konstruktion ist darüber hinaus unempfindlich gegenüber Fertigungstoleranzen und thermische Einflüsse.

Eine vorteilhafte Weiterbildung besteht darin, dass der Verdichter als über einen Schubkurbeltrieb angetriebener Hubkolbenverdichter aufweist, wobei der Schubkurbeltrieb aus einem Kurbelrad und einer mit Kurbelrad und einem Kolben verbundenen Pleuelstange besteht und dass das Manometer der hochdruckseitigen Auslassleitung des Hubkolbenverdichters zugeordnet und über eine Gewindeverbindung an die Auslassleitung angeschlossen ist. Bei einer solchen Ausführung mit einem einfachen und ständig Druckspitzen/Druckstöße erzeugenden Hubkolbenkompressoren zeigen sich die Vorteile der Erfindung besonders stark, da hier eine nahezu vollständige Drosselung der Druckspitzen/Druckstöße erreicht werden kann. Damit ist der für den Anwender wichtige Druck in z. B dem aufblasbaren Gegenstand, der üblicherweise sorgsam überwacht werden muss, ohne Zeigerzittern abzulesen.

Eine weitere vorteilhafte Weiterbildung besteht darin, dass die Gewindelänge und der zwischen Gewindespitzen und Gewindefuß bestehende Spalt so ausgebildet sind, dass Druckstöße im Manometer bedämpft werden. Dadurch lässt sich auch bei Verwendung handelsüblicher Gewinde die Drosselwirkung leicht durch Veränderung der entsprechenden übrigen Gewindegeometrie verändern, d.h. Gewindcdurchmesser und Einschraubtiefe bzw. Gewindelänge. Beispielsweise kann durch das Anbringen von die Einschraubtiefe begrenzenden Anschlägen die Drosselwirkung beliebig voreingestellt und gesichert werden.

Eine weitere vorteilhafte Weiterbildung besteht darin, dass die Materialpaarung im Gewinde korrosionsverhindernd ausgebildet ist. Damit verhindert man, dass sich durch Korrosionsablagerungen der Drosselquersehnitt im Gewinde verändert oder gar gänzlich schließt. Hierbei sind insbesondere gleiche Materialien vorteilhaft. Auch Paarungen mit mindestens einem Kunststoffteil / Kunststoffgewinde sind hier geeignet.

Eine weitere vorteilhafte Weiterbildung besteht darin, dass in Strömungsrichtung vor der Gewindeverbindung ein Ausgleichsvolumen angeordnet ist. Ein solches Ausgleichsvolumen erhöht zusätzlich die Dämpfung und vergleichmäßigt damit die auf das Manometer einwirkenden Druckstöße. Dabei besteht eine weitere vorteilhafte und besonders leicht zu realisierende Weiterbildung darin, dass das Ausgleichsvolumen durch eine Düsenanordnung in Strömungsrichtung vor der Gewindeverbindung erzeugt wird.

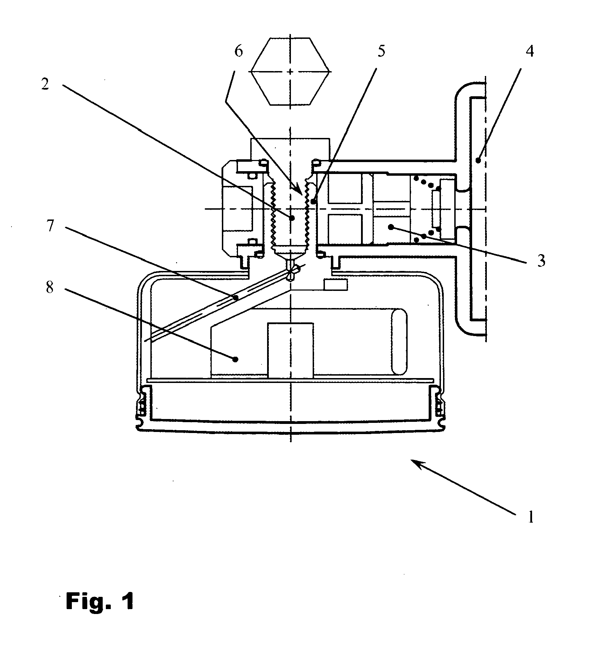

Anhand eines Ausführungsbeispieles soll die Erfindung näher erläutert werden. Die Fig. 1 zeigt ein Manometer 1, welches über eine Gewindeverbindung 2 mit der Auslassleitung 3 einer hier nicht näher dargestellten Kompressoreinheit verbunden ist. Die Kompressoreinheit weist einen über einen Schubkurbeltrieb angetriebenen und hier ebenfalls nicht im Detail dargestellten Hubkolbenverdichter 4 auf und erzeugt deshalb permanent pulsförmige Druckstöße.

Durch den zwischen dem Innengewinde 5 und dem Außengewinde 6 der Gewindeverbindung 2 bestehenden Gewindespalt erfolgt die Zuführung des Druckmediums zur Leitung 7 innerhalb des Manometers, welche mit einer durch Innendruck beaufschlagten rohrförmigen Spirale 8 verbunden ist, die die hier ebenfalls nicht näher gezeigte Messeinrichtung / Mess-Spirale des Manometers 1 darstellt. Die durch den Innendruck in der rohrförmigen Spirale erzeugte Dehnung bzw. Drehung der Mess-Spirale wird auf einen Manometerzeiger übertragen. Natürlich können solche Messeinrichtungen auch als Membranmanometer ausgebildet sein.

Die hier gezeigte Ausführung stellt eine einfach und kostengünstig herzustellende Kompressoreinheit mit einem Manometer bereit, das gegenüber Druckschwankungen tolerant reagiert und ohne Zeigerschwankungen ablesbar ist.

### Bezugszeichenliste

### (Teil der Beschreibung)

- 1: Manometer
- 2: Gewindeverbindung
- 3: Auslassleitung
- 4: Hubkolbenverdichter
- 5: Innengewinde
- 6: Außengewinde
- 7: Leitung
- 8: Rohrförmige Spirale/Mess-Spüale

## Patentansprüche

1. Kompressoreinheit, insbesondere zur Luftverdichtung innerhalb tragbarer / transportabler Geräte, welche mindestens einen Motor, einen Verdichter und ein Manometer aufweist, **dadurch gekennzeichnet, dass** das Manometer (1) über eine Gewindeverbindung (2) mit der Kompressoreinheit verbunden ist, wobei die Zufuhr des Druckmediums zum Manometer durch den zwischen dem Innengewinde (5) und dem Außengewinde (6) der Gewindeverbindung (2) bestehenden Gewindespalt erfolgt.

2. Kompressoreinheit nach Anspruch 1, **dadurch gekennzeichnet, dass** der Verdichter als über einen Schubkurbeltrieb angetriebener Hubkolbenverdichter (4) aufweist, wobei der Schubkurbeltrieb aus einem Kurbelrad und einer mit Kurbelrad und einem Kolben verbundenen Pleuelstange besteht und dass das Manometer der hochdruckseitigen Auslassleitung (3) des Hubkolbenverdichters zugeordnet und über eine Gewindeverbindung (2) an die Auslassleitung angeschlossen ist.

3. Kompressoreinheit nach Anspruch 1 oder 2, **dadurch gekennzeichnet, dass** die Gewindelänge und der zwischen Gewindespitzen und Gewindefuß bestehende Spalt so ausgebildet sind, dass Druckstöße im Manometer bedämpft werden.

4. Kompressoreinheit nach Anspruch 1 bis 3, **dadurch gekennzeichnet, dass** die Materialpaarung im Gewinde korrosionsverhindernd ausgebildet ist.

5. Kompressoreinheit nach Anspruch 1 bis 4, **dadurch gekennzeichnet, dass** in Strömungsrichtung vor der Gewindeverbindung ein Ausgleichsvolumen angeordnet ist.

6. Kompressoreinheit nach Anspruch 5, **dadurch gekennzeichnet, dass** das Ausgleiehsvolumen durch eine Düsenanordnung in Strömungsrichtung vor der Gewindeverbindung erzeugt wird.

## Claims

1. Compressor unit, in particular for compressing air within portable/transportable devices, which comprises at least a motor, a compressor and a pressure gauge, **characterized in that** the pressure gauge (1) is connected to the compressor unit via a threaded connection (2), wherein the pressure medium is supplied to the pressure gauge through the thread gap between the internal thread (5) and the external thread (6) of the threaded connection (2).

2. Compressor unit according to Claim 1, **characterized in that** the compressor has as reciprocating piston compressor (4) driven by means of a slider crank mechanism, wherein the slider crank mechanism is composed of a crank wheel and of a connecting rod connected to the crank wheel and to a piston, and **in that** the pressure gauge is assigned to the high-pressure-side outlet line (3) of the reciprocating piston compressor and is connected to the outlet line via a threaded connection (2).

3. Compressor unit according to Claim 1 or 2, **characterized in that** the thread length and the gap between the tip of the thread and the root of the thread is embodied in such a way that pressure surges in the pressure gauge are damped.

4. Compressor unit according to Claims 1 to 3, **characterized in that** the material pairing in the thread is formed in a corrosion-preventing fashion.

5. Compressor unit according to Claims 1 to 4, **characterized in that** an equalizing volume is arranged upstream of the threaded connection in the direction of flow.

6. Compressor unit according to Claim 5, **characterized in that** the equalizing volume is generated by a nozzle arrangement upstream of the threaded connection in the direction of flow.

## Revendications

1. Unité de compresseur, en particulier pour comprimer de l'air dans des appareils portables ou transportables, présentant au moins un moteur, un compresseur et un manomètre,
**caractérisée en ce que**
le manomètre (1) est relié à l'unité de compresseur par une liaison filetée (2), l'apport de fluide sous pression au manomètre s'effectuant par l'interstice fileté formé entre le filet intérieur (5) et le filet extérieur (6) de la liaison filetée (2).

2. Unité de compresseur selon la revendication 1, **caractérisée en ce que** le compresseur présente en tant que compresseur (4) à piston entraîné par une transmission à manivelle et poussoir, la transmission à manivelle et poussoir étant constituée d'une roue de manivelle et d'une tige de bielle reliée à la roue de manivelle et à un piston, et **en ce que** le manomètre est associé au conduit de sortie (3) côté haute pression du compresseur à piston et est raccordé au conduit de sortie par la liaison filetée (2).

3. Unité de compresseur selon les revendications 1 ou 2, **caractérisée en ce que** la longueur du filet et l'interstice formé entre les sommets du filet et les pieds des filets sont dimensionnés de manière à amortir les à-coups de pression dans le manomètre.

4. Unité de compresseur selon les revendications 1 à 3, **caractérisée en ce que** les matériaux du filet sont appariés de manière à empêcher la corrosion.

5. Unité de compresseur selon les revendications 1 à 4, **caractérisée en ce qu'**un volume de compensation est disposé en amont de la liaison filetée dans la direction d'écoulement.

6. Unité de compresseur selon la revendication 5, **caractérisée en ce que** le volume de compensation est formé par un système de tuyère disposé en amont de la liaison filetée dans la direction d'écoulement.
